(19) Europäisches Patentamt
European Patent Office
Office européen des brevets

(11) **EP 4 342 069 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22726435.5**

(22) Anmeldetag: **29.04.2022**

(51) Internationale Patentklassifikation (IPC):
*H02P 21/16* (2016.01)    *H02P 21/34* (2016.01)
*H02P 25/022* (2016.01)

(52) Gemeinsame Patentklassifikation (CPC):
**H02P 21/16; H02P 21/34; H02P 25/022;**
H02P 21/32

(86) Internationale Anmeldenummer:
**PCT/EP2022/061437**

(87) Internationale Veröffentlichungsnummer:
**WO 2022/243007 (24.11.2022 Gazette 2022/47)**

(54) **VERFAHREN UND VORRICHTUNG ZUR ERMITTLUNG EINER WINKELDIFFERENZ**

METHOD AND DEVICE FOR DETERMINING AN ANGLE DIFFERENCE

PROCÉDÉ ET DISPOSITIF POUR DÉTERMINER UNE DIFFÉRENCE D'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2021 DE 102021205258**

(43) Veröffentlichungstag der Anmeldung:
**27.03.2024 Patentblatt 2024/13**

(73) Patentinhaber: **Robert Bosch GmbH**
**70442 Stuttgart (DE)**

(72) Erfinder:
• **RIEDERER, Miriam**
**70734 Fellbach (DE)**
• **LECHNER, Benjamin**
**75181 Pforzheim (DE)**
• **SCHUSTER, Christoph**
**70469 Stuttgart (DE)**
• **CHEN, Lei**
**70437 Stuttgart (DE)**
• **MUELLER, Michael**
**71088 Holzgerlingen (DE)**

(56) Entgegenhaltungen:
EP-A1- 2 770 627    EP-B1- 2 770 626
CN-B- 104 079 215    DE-A1- 102012 102 898

**Beschreibung**

Die Erfindung betrifft ein Verfahren und eine Vorrichtung zur Ermittlung einer Winkeldifferenz zwischen einer Nulllage eines Rotorlagesensors einer elektrischen Maschine und einer Ausrichtung der Permanentmagneten der elektrischen Maschine. Ferner betrifft die Erfindung einen Antriebsstrang mit einer entsprechenden Vorrichtung und ein Fahrzeug mit einem Antriebsstrang sowie ein Computerprogramm und ein computerlesbares Medium.

Stand der Technik

In Elektro- und Hybridfahrzeugen werden häufig elektrische Maschinen, bevorzugt Synchronmaschinen, als Traktions- oder Antriebsmaschinen eingesetzt. Um eine elektrische Maschine, insbesondere deren Antriebsmoment, effizient zu regeln muss die Winkeldifferenz, oder der Offsetwinkel, zwischen der Nulllage eines Rotorlagesensors und der Ausrichtung der Permanentmagneten des Rotors der elektrischen Maschine bekannt sein. Je genauer dieser Wert bekannt ist, desto genauer kann die Maschine geregelt werden. Bevorzugt kann somit für die Regelung der elektrischen Maschine die Ausrichtung der Permanentmagneten des Rotors mit der d-Achse des rotierenden Koordinatensystems der feldorientierten Regelung abgeglichen werden. Als Lagesensor zur Bestimmung der Rotorlage wird bevorzugt ein Resolver oder ein Inkrementalgeber oder andere Lagegeber verwendet.

Aus dem Stand der Technik sind unterschiedliche Ansätze bekannt, diesen Offsetwinkel zu ermitteln. Die Druckschriften CN 104 079 215 B, EP 2 770 626 B1, DE 10 2012 102898 A1 und EP 2 770 627 A1 offenbaren Verfahren und Vorrichtungen zur Ermittlung einer Winkeldifferenz.

Ein bekanntes Verfahren hierzu ist die Nullstromregelung. Bei diesen Verfahren wird bei einer drehenden Maschine der Strom auf eine Stromstärke von Null Ampere geregelt. Um den Strom auf Null Ampere zu regeln muss der Stromregler die dabei induzierte Spannung der drehenden elektrischen Maschine, oder des Rotors, kompensieren. In Abhängigkeit der Regelabweichung der Führungsgröße Sollstrom und der Rückführung Iststrom ergeben sich im stationären Zustand als Ausgangsgröße des Stromreglers als Stellgröße Sollspannungen, deren Phasenlage der induzierten Spannung und damit auch der Ausrichtung der Permanentmagneten des Rotors oder der Richtung der positiven Flussrichtung der Permanentmagneten entsprechen. Bei der Ermittlung des Offsetwinkels mittels der Nullstromregelung verfälschen Störgrößen das Ergebnis. Eine der relevantesten Störgrößen sind die Unterschiede zwischen der vom Stromregler ermittelten Sollspannung (Udq_Soll) und der tatsächlich anliegenden Istspannung (Udq_Ist) an den Wicklungen der elektrischen Maschine. Die Differenz der ermittelten Sollspannung (Udq_Soll) und der tatsächlich anliegenden Istspannung (Udq_Ist) wird auch als Fehlerspannung (Udq_error) bezeichnet.

$$Udq\_Ist \neq Udq\_Soll;$$

$$Udq\_Ist - Udq\_Soll = Udq\_error$$

Bei dem Verfahren der Nullstromregelung ist in dem Betriebspunkt, bei dem der Strom auf eine Stromstärke von Null Ampere geregelt wird, ist die Fehlerspannung unzureichend bekannt. Diese kann in diesem Betriebspunkt daher nicht kompensiert werden.

Ein alternatives Verfahren offenbart die Druckschrift DE 10 2008 001 408 A1. Der Offsetwinkel wird als Funktion der Differenz zwischen einem Feldwinkel, eines eingeprägten Statormagnetfelds und eines ermittelten Sensorwinkels ermittelt.

Es besteht ein Bedürfnis für Verfahren und Vorrichtungen zur Kalibrierung des Offsetwinkels.

Offenbarung der Erfindung

Es wird ein Verfahren zur Ermittlung einer Winkeldifferenz zwischen einer Nulllage eines Rotorlagesensors einer elektrischen Maschine und einer Ausrichtung der Permanentmagneten der elektrischen Maschine bereitgestellt, wobei die elektrische Maschine mittels einer feldorientierten Regelung geregelt wird und der Rotor der elektrischen Maschine rotiert. Das Verfahren umfasst folgende Schritte: Vorgeben eines ersten d-Sollstromwertes ungleich Null Ampere und Vorgeben eines ersten q-Sollstromwertes; Ermitteln einer resultierenden ersten d-Sollspannung und ersten q-Sollspannung; Vorgeben eines zweiten d-Sollstromwertes, wobei der zweite d-Sollstromwert dem Wert des ersten d-Sollstromwertes mit komplementären Vorzeichen entspricht, und Vorgeben eines zweiten q-Sollstromwertes, wobei der zweite q-Sollstromwert dem Wert des ersten q-Sollstromwertes mit komplementären Vorzeichen entspricht; Ermitteln einer resultierenden zweiten d-Sollspannung und einer zweiten q-Sollspannung; Ermitteln eines Winkelfehlers in Abhängigkeit der ermittelten ersten d-Sollspannung, der ersten q-Sollspannung, der zweiten d-Sollspannung und der zweiten q-Sollspannung; Ermitteln der Winkeldifferenz in Abhängigkeit des Winkelfehlers.

Somit wird ein Verfahren zur Ermittlung der Winkeldifferenz zwischen einer Nulllage eines Rotorlagesensors einer elektrischen Maschine und der Ausrichtung der Permanentmagneten der elektrischen Maschine bereitgestellt. Die elektrische Maschine wir mittels einer feldorientierten Regelung geregelt. Feldorientierte Regelungen elektrischer Maschinen sind bekannt. Dabei werden als weitgehend sinusförmig angenommene Wechselgrößen (beispielsweise Wechselspannungen und Wechselströme) nicht direkt in ihrem zeitlichen Momentanwert, sondern in einem um den Phasenwinkel innerhalb der Periode bereinigten Momentanwert geregelt. Zu diesem Zweck werden die erfassten Wechselgrößen, beispielsweise die Ist-Phasenströme der elektrischen Maschine, jeweils in ein mit der Frequenz der Wechselgrößen rotierendes Koordinatensystem übertragen. Innerhalb des rotierenden Koordinatensystems ergeben sich dann im stationären Betrieb der elektrischen Maschine aus den Wechselgrößen Gleichgrößen, auf die alle üblichen Verfahren der Regelungstechnik angewandt werden können. Zur Bestimmung der Lage des Rotors werden Lagegeber oder Rotorlagesensoren verwendet, welche ein Winkelsignal zur Bestimmung des Rotors relativ zum Stator ausgeben. Aufgrund der mehrphasigen phasenversetzten in den Stator eingeprägten Wechselströme ergibt sich beim Betrieb der elektrischen Maschine ein drehendes Magnetfeld. Die Richtung dieses drehenden Magnetfeldes entspricht der Richtung des resultierenden Gesamtflusses, welcher durch Überlagerung des durch die Permanentmagnete erzeugten Rotorflusses und des durch die Statorströme erzeugten Statorflusses entsteht. Für die Regelung ist eine genaue Kenntnis der Abweichung, also des Offsetwinkels oder der Winkeldifferenz, zwischen dem Winkelsignal des Rotorlagesensors und der tatsächlichen Rotorflussrichtung, oder der Ausrichtung der Permanentmagnete der elektrischen Maschine, wichtig, da für die Regelung der elektrischen Maschine die Rotorflussrichtung aus dem Winkelsignal und dem Offsetwinkel berechnet wird. Innerhalb des rotierenden Koordinatensystems, dem d/q-Koordinatensystems, welches sich synchron mit dem Rotorfluss dreht und dessen d-Achse in Richtung des Rotorflusses zeigt, wird ein Statorstrom als Statorstromzeiger Is repräsentiert, welcher über seinen Betrag und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger wird in zwei Komponenten Isd und Isq zerlegt werden welche im stationären Fall Gleichgrößen sind. Bei der feldorientierten Regelung werden folglich die Istphasenströme Iu, Iv, Iw, beispielsweise mittels Stromsensoren erfasst. Mittels der d/q-Transformation, oder Park-Transformation, werden die dreiphasigen Größen in ein zweiachsiges Koordinatensystem mit den Achsen d und q überführt. Als Führungsgröße für die Regelung wird, meist in Abhängigkeit eines Drehmomentwunsches, ein Sollstrom ermittelt und vorgegeben. In dem d/q System wird aus der Differenz des Sollstroms und der d/q- Istströme eine Regelabweichung ermittelt und dem Stromregler als Eingangsgröße bereitgestellt. Als Stellgröße gibt der Regler d/q-Sollspannungen aus. Diese d/q-Sollspannungen werden rücktransformiert in das dreiphasige System. Diese dreiphasigen Sollspannungen werden mittels einem Inverter zur Bestromung der elektrischen Maschine bereitgestellt und an die einzelnen Phasen der elektrischen Maschine angelegt. Der Rotor der elektrischen Maschine rotiert während des Verfahrens zur Ermittlung der Winkeldifferenz. Der Rotor wird hierzu bevorzugt extern angetrieben, bevorzugt beispielsweise bei einem unbelasteten Auslauf einer Antriebsachse eines Fahrzeugs oder auf einem Prüfstand, bevorzugt lastfrei, bevorzugt abgekoppelt vom Antriebsstrang.

Das Verfahren umfasst die Schritte: Vorgeben eines ersten Sollstromwertes als Führungsgröße, wobei in dem d/q System ein erster d-Sollstromwert ungleich Null Ampere vorgegeben wird und ein erster q-Sollstromwert. Ermitteln einer ersten sich einstellenden oder resultierenden d/q-Sollspannung als Stellgröße des Stromreglers, wobei in dem d/q System eine erste d-Sollspannung und eine ersten q-Sollspannung ermittelt wird. Vorgeben eines zweiten Sollstromwertes als Führungsgröße, wobei in dem d/q System ein zweiter d-Sollstromwert vorgegeben wird und ein zweiter q-Sollstromwert. Dabei entspricht der zweite d-Sollstromwert dem Wert des ersten d-Sollstromwertes mit komplementären Vorzeichen und ebenso entspricht der zweite q-Sollstromwert dem Wert des ersten q-Sollstromwertes mit komplementären Vorzeichen. Es wird eine zweite sich einstellende oder resultierende d/q-Sollspannung als Stellgröße des Stromreglers ermittelt, wobei in dem d/q System eine zweite d-Sollspannung und eine zweite q-Sollspannung ermittelt wird. Bevorzugt erfolgt die Vorgabe der Sollströme mittels konstanter Sollstromwerte. Bevorzugt ist die Vorgabe der Sollströme auch als Wechselgrößen möglich, deren Mittelwerte einem vorgegebenen Sollstromwert entsprechen. Bevorzugt können sich sodann auch als Sollspannungen Wechselgrößen einstellen, deren Mittelwerte als Sollspannung ermittelt werden. Weiter wird ein Winkelfehler in Abhängigkeit der ermittelten ersten d-Sollspannung, der ersten q-Sollspannung, der zweiten d-Sollspannung und der zweiten q-Sollspannung ermittelt. Schließlich wird die Winkeldifferenz in Abhängigkeit des Winkelfehlers ermittelt. Bevorzugt wird die ermittelte Winkeldifferenz für die weitere Regelung der elektrischen Maschine dem Stromregler zugeführt.

Vorteilhaft wird ein Verfahren zur Ermittlung einer Winkeldifferenz zwischen einer Nulllage eines Rotorlagesensors einer elektrischen Maschine und einer Ausrichtung der Permanentmagneten der elektrischen Maschine bereitgestellt. Es ist eine regelungstechnische Lösung die eine genaue Bestimmung der Winkeldifferenz ermöglicht, ohne dass die Phasenspannungen gemessen werden. Die höhere Güte im Vergleich zu den bekannten Methoden ergibt sich daraus, dass die Fehlerspannungen und der Soll-Strom bei kleinen Strömen punktsymmetrisch zum Ursprung sind. Mittels Vorgabe zweier Soll-Ströme mit umgekehrten Vorzeichen ((Id_soll_1, Iq_soll_1), (-Id_soll_1,-Iq_soll_1)) ergeben sich ebenfalls Fehlerspannungen (Udq_error(Id_soll_1, Iq_soll_1), Udq_error(-Id_soll_1,-Iq_soll_1)) mit umgekehrten Vorzeichen:

$$Udq\_error(Id\_soll\_1, Iq\_soll\_1) = - Udq\_error(-Id\_soll\_1,-Iq\_soll\_1).$$

Mathematisch ausgedrückt ergibt sich für die Fehlerspannungen:

$$Ud\_error\ (Id,Iq) = - Ud\_error\ (-Id,-Iq)\ und\ Uq\_error\ (Id,Iq) = - Uq\_error\ (-Id,-Iq)$$

Für die tatsächlich anliegenden Istspannungen ergibt sich:

$$Ud\_Ist1 = Ud\_soll\_1 + Ud\_error;\ Ud\_Ist2 = Ud\_soll\_2 - Ud\_error;$$

$$Uq\_Ist1 = Uq\_soll\_1 + Uq\_error;\ Uq\_Ist2 = Uq\_soll\_2 - Uq\_error;$$

Bei der Summierung der beiden Istspannungen heben sich die symmetrischen Fehlerspannungen näherungsweise auf. Es ergibt sich:

$$Ud\_soll\_1 + Ud\_soll\_2 = Ud\_Ist1 + Ud\_Ist2$$

$$Uq\_soll\_1 + Uq\_soll\_2 = Uq\_Ist1 + Uq\_Ist2$$

Bei der Berücksichtigung dieser Zusammenhänge bei der Ermittlung der Winkeldifferenz wird folglich der Fehlereinfluss der Fehlerspannung minimiert.

In einer anderen Ausgestaltung der Erfindung wird der erste q-Sollstromwert gleich Null Ampere vorgegeben.

Bei der Vorgabe des ersten Sollstromwertes als Führungsgröße wird in dem d/q System der erste d-Sollstromwert ungleich Null Ampere vorgegeben und der erste q-Sollstromwert gleich Null Ampere vorgegeben.

Vorteilhaft wird ein alternatives Verfahren bereitgestellt, welches kein oder lediglich ein geringes Moment während der Durchführung erzeugt.

In einer anderen Ausgestaltung der Erfindung erfolgt das Ermitteln des Winkelfehlers in Abhängigkeit des Arcustangens des Quotienten einer ersten Summe der ersten d-Sollspannung und der zweiten d-Sollspannung und einer zweiten Summe der ersten q-Sollspannung und der zweiten q-Sollspannung.

Zur Ermittlung des Winkelfehlers wird ein Arcustangens eines Quotienten gebildet. Der Zähler des Quotienten ist eine erste Summe der ersten d-Sollspannung und der zweiten d-Sollspannung. Der Nenner des Quotienten ist eine zweite Summe der ersten q-Sollspannung und der zweiten q-Sollspannung.

Mathematisch ergibt sich:

$$PhiErr\_opt = atan\ ((Ud\_soll\_1 + Ud\_soll\_2)/(Uq\_soll\_1 + Uq\_soll\_2))$$

Vorteilhaft wird eine Rechenvorschrift zur Ermittlung des Winkelfehlers in Abhängigkeit der Größen des Stromreglers bereitgestellt.

In einer anderen Ausgestaltung der Erfindung umfasst das Verfahren einen weiteren Schritt: Ermitteln der Winkeldifferenz in Abhängigkeit einer vorgegebenen Winkeldifferenz.

Für den Fall, dass bereits eine vorgegebene Winkeldifferenz, insbesondere eine etwas ungenauere vorgegebene Winkeldifferenz, in dem System bekannt ist, wird die Winkeldifferenz in Abhängigkeit der vorgegebenen Winkeldifferenz berechnet.

Vorteilhaft wird ein Verfahren für eine genauere Bestimmung der Winkeldifferenz bereitgestellt.

In einer anderen Ausgestaltung der Erfindung wird die vorgegebene Winkeldifferenz in Abhängigkeit eines vorgegebenen Winkelfehlers ermittelt. Insbesondere wird die vorgegebene Winkeldifferenz in Abhängigkeit einer Differenz einer Sensorwinkeldifferenz und eines vorgegebenen Winkelfehlers ermittelt. Eine Sensorwinkeldifferenz ist beispielsweise ein Wert, der die Einbaulage eines Rotorlagesensors relativ zu der Ausrichtung der Permanentmagneten der elektrischen Maschine oder einer Nulllage des Rotors beschreibt oder ein für den Rotorlagesensor spezifischer Wert, der eine Sensorsignalabweichung relativ zu der Ausrichtung der Permanentmagneten der elektrischen Maschine oder einer Nulllage des Rotors beschreibt.

Vorteilhaft wird ein Verfahren zur Ermittlung der vorgegebenen Winkeldifferenz bereitgestellt.

In einer anderen Ausgestaltung der Erfindung erfolgt die Ermittlung des vorgegebenen Winkelfehlers in Abhängigkeit einer Nullstromregelung oder eines Testpulsverfahrens.

Eine Nullstromregelung ist beispielhaft in der Einleitung beschrieben, ein Testpulsverfahren ist beispielhaft aus der Druckschrift DE 10 2008 042 360 A1 bekannt.

Vorteilhaft wird ein Verfahren zur Ermittlung des vorgegebenen Winkelfehlers bereitgestellt.

In einer anderen Ausgestaltung der Erfindung erfolgt das Ermitteln der Winkeldifferenz in Abhängigkeit der Differenz der vorgegebenen Winkeldifferenz und dem Winkelfehler.

Ferner betrifft die Erfindung eine Vorrichtung zur Ermittlung einer Winkeldifferenz zwischen der Nulllage eines Rotorlagesensors einer elektrischen Maschine und der Ausrichtung der Permanentmagneten der elektrischen Maschine, wobei die elektrische Maschine mittels einer feldorientierten Regelung geregelt wird und der Rotor der elektrischen Maschine rotiert, mit einer Logikeinrichtung die dazu eingerichtet ist, ein oben beschriebenes Verfahren durchzuführen.

Die Vorrichtung zur Ermittlung einer Winkeldifferenz zwischen der Nulllage eines Rotorlagesensors einer elektrischen Maschine und der Ausrichtung der Permanentmagneten der elektrischen Maschine umfasst eine Logikeinrichtung, die dazu eingerichtet ist, sowohl die die Stromsollwerte als Führungsgrößen dem Stromregler vorzugeben, als auch die die Sollspannungenals Stellgröße des Stromreglers zu ermitteln oder auszulesen und beschriebene Berechnungen zur Ermittlung der Winkeldifferenz auszuführen.

Vorteilhaft wird eine Vorrichtung zur Ermittlung einer Winkeldifferenz zwischen der Nulllage eines Rotorlagesensors einer elektrischen Maschine und der Ausrichtung der Permanentmagneten der elektrischen Maschine bereitgestellt. Die erzielbare Genauigkeit ist im Vergleich zu bekannten Lösungen sehr hoch und erfordert keine Messung der Phasenspannungen an der elektrischen Maschine. Ferner betrifft die Erfindung einen Antriebsstrang mit einer beschriebenen Vorrichtung. Insbesondere umfasst der Antriebsstrang eine Leistungselektronik, einen elektrischen Antrieb und/ oder eine Batterie zur Versorgung des elektrischen Antriebs mit elektrischer Energie. Ein derartiger Antriebsstrang dient beispielsweise dem Antrieb eines elektrischen Fahrzeugs. Mittels des Verfahrens und der Vorrichtung wird ein sicherer Betrieb des Antriebstrangs ermöglicht.

Ferner betrifft die Erfindung ein Fahrzeug, mit einem beschriebenen Antriebsstrang. Vorteilhaft wird somit ein Fahrzeug bereitgestellt, welches eine Vorrichtung umfasst, mit der eine Winkeldifferenz zwischen der Nulllage eines Rotorlagesensors einer elektrischen Maschine und der Ausrichtung der Permanentmagneten der elektrischen Maschine ermittelt wird.

Ferner betrifft die Erfindung ein Computerprogramm, welches Befehle umfasst, die bewirken, dass die beschriebene Vorrichtung die beschriebenen Verfahrensschritte ausführt. Ferner betrifft die Erfindung ein computerlesbares Medium, auf dem das Computerprogramm gespeichert ist.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnung

Im Folgenden soll die Erfindung anhand einiger Figuren näher erläutert werden, dazu zeigen:

Figur 1
eine schematische Darstellung einer Vorrichtung zur Ermittlung einer Winkeldifferenz zwischen der Nulllage eines Rotorlagesensors einer elektrischen Maschine und der Ausrichtung der Permanentmagneten der elektrischen Maschine

Figur 2
ein schematisch dargestelltes Ablaufdiagramm für ein Verfahren zur Ermittlung einer Winkeldifferenz zwischen der Nulllage eines Rotorlagesensors einer elektrischen Maschine und der Ausrichtung der Permanentmagneten der elektrischen Maschine.

Figur 3
ein schematisch dargestelltes Fahrzeug mit einem Antriebsstrang,

Ausführungsformen der Erfindung

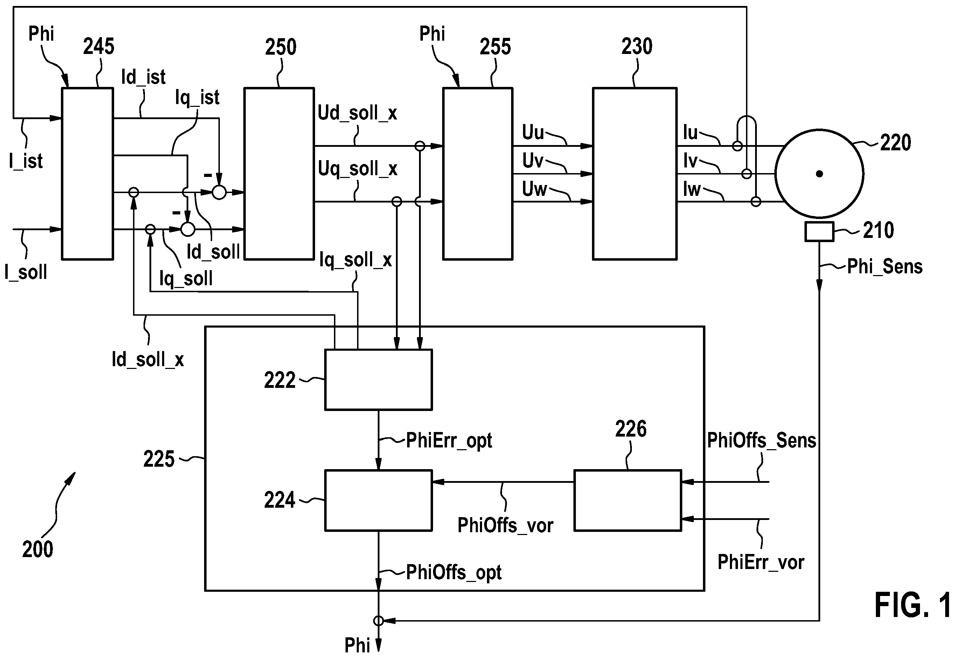

Die Figur 1 zeigt eine Vorrichtung 200 zur Ermittlung einer Winkeldifferenz PhiOffs_opt zwischen der Nulllage eines Rotorlagesensors 210 einer elektrischen Maschine 220 und der Ausrichtung der Permanentmagneten der elektrischen Maschine 220. Der Rotorlagesensor 210 gibt das Signal Phi_Sens aus. Bevorzugt wird aus dem Signal Phi_Sens und der ermittelten Winkeldifferenz PhiOffs_opt ein Winkelsignal Phi ermittelt, welches für die Regelung der elektrischen Maschine verwendet wird. Die elektrische Maschine 220 wird mittels einer feldorientierten Regelung geregelt. Die feldorientierte Regelung umfasst insbesondere eine d/q Transformation 245, erfindungsgemäß einen Stromregler 250, und insbesondere eine inverse d/q Transformation 255, auch Rücktransformation genannt. Bevorzugt wird bei der feldorientierten Regelung mittels der d/q Transformation 245 eine vorgegebene Führungsgröße, beispielsweise ein Sollstrom I_soll, in das d/q System transformiert, oder der feldorientierten Regelung wird der Sollstrom direkt als d/q Größe, also Id_soll und Iq_soll vorgegeben. Die d/q Transformation erfolgt bevorzugt in Abhängigkeit des Winkelsignals Phi. In dem d/q System wird aus der Differenz des Sollstroms Id_soll, Iq_soll und der d/q- Istströme Id_ist, Iq_ist eine Regelabweichung ermittelt und dem Stromregler 250 als Eingangsgröße bereitgestellt. Als Stellgröße gibt der Regler Sollspannungen im d/q System, Ud_soll und Uq_soll, aus. Diese d/q-Sollspannungen werden mittels der inversen d/q Transformation 255 rücktransformiert in das dreiphasige System. Die Rücktransformation erfolgt bevorzugt in Abhängigkeit des Winkelsignals Phi. Die dreiphasigen Sollspannungen Uu, Uv, Uw werden mittels einem Inverter 230 zur Bestromung der elektrischen Maschine bereitgestellt und an die einzelnen Phasen der elektrischen Maschine angelegt. An den Wicklungen der elektrischen Maschine 220 resultieren die Istströme Iu, Iv, Iw, die, beispielsweise mittels Stromsensoren, erfasst und der feldorientierten regelung zugeführt. Mittels der d/q Transformation 245 werden sie in das d/q System transferiert. Dort werden sie, wie oben beschrieben, zur Ermittlung der Regelabweichung der Differenzbildung, aus Soll-strom und der d/q-Istströme, zugeführt. Die Vorrichtung 200 umfasst eine Logikeinheit 225, insbesondere eine Recheneinheit. Die Logikeinheit 225 ist dazu eingerichtet, mittels einer Einlese-/Ausgabeeinheit 222 einen ersten d-Sollstromwertes Id_soll_1 ungleich Null Ampere auszugeben und vorzugeben. Insbesondere wird der erste d_Sollstromwert Id_soll_1 als d-Sollstrom der feldorientierten Regelung, bevorzugt im d/q System, vorgegeben. Ebenso wird ein erster q-Sollstromwert Iq_soll_1 ausgegeben und vorgegeben. Insbesondere wird der erste q_Sollstromwert Iq_soll_1 als q-Sollstrom der feldorientierten Regelung, bevorzugt im d/q System, vorgegeben. Die Logikeinheit 225 ist weiter dazu eingerichtet, mittels der Einlese-/Ausgabeeinheit 222 eine erste d-Sollspannung Ud_soll_1 und eine erste q-Sollspannung Uq_soll_1 einzulesen oder zu ermitteln. Diese erste d-Sollspannung Ud_soll_1 und die erste q-Sollspannung Uq_soll_1 sind die Ausgangsgrößen des Stromreglers 250, insbesondere wenn die vorgegebenen d- und q-Sollstromwerte eingeregelt sind. Die Logikeinheit 225 ist weiter dazu eingerichtet, mittels der Einlese-/Ausgabeeinheit 222 einen zweiten d-Sollstromwert Id_soll_2 ungleich Null Ampere auszugeben und vorzugeben. Insbesondere wird der zweite d_Sollstromwert Id_soll_2 als d-Sollstrom der feldorientierten Regelung, bevorzugt im d/q System, vorgegeben. Ebenso wird ein zweiter q-Sollstromwert Iq_soll_2 ausgegeben und vorgegeben. Insbesondere wird der zweite q_Sollstromwert Iq_soll_2 als q-Sollstrom der feldorientierten Regelung, bevorzugt im d/q System, vorgegeben. Die Logikeinheit 225 ist weiter dazu eingerichtet, mittels der Einlese-/Ausgabeeinheit 222 eine zweite d-Sollspannung Ud_soll_2 und eine zweite q-Sollspannung Uq_soll_2 einzulesen oder zu ermitteln. Diese zweite d-Sollspannung Ud_soll_2 und die zweite q-Sollspannung Uq_soll_2 sind die Ausgangsgrößen des Stromreglers 250, insbesondere wenn die vorgegebenen d- und q- Sollstromwerte eingeregelt sind. Die Logikeinheit 225 ist weiter dazu eingerichtet, mittels der Einlese-/Ausgabeeinheit 222 einen Winkelfehler PhiErr_opt in Abhängigkeit der ermittelten ersten d-Sollspannung Ud_soll_1, der ersten q-Sollspannung Uq_soll_1, der zweiten d-Sollspannung Ud_soll_2 und der zweiten q-Sollspannung Uq_soll_2 zu ermitteln. Die Logikeinheit 225 ist weiter dazu eingerichtet, mittels einer Ermittlungseinheit 224 die Winkeldifferenz PhiOffs_opt in Abhängigkeit des Winkelfehlers PhiErr_opt zu ermitteln und auszugeben. Bevorzugt wird das Signal Phi_Sens des Winkellagesensors mit der ermittelten Winkeldifferenz PhiOffs_opt korrigiert. Daraus resultiert bevorzugt das Winkelsignal Phi, welches für die Regelung der elektrischen Maschine verwendet wird. Bevorzugt gibt die Einlese-/Ausgabeeinheit 222 einen ersten q-Sollstromwertes Iq_soll_1 gleich Null Ampere aus und vor. Bevorzugt ermittelt die Einlese-/Ausgabeeinheit 222 den Winkelfehler PhiErr_opt in Abhängigkeit des Arcustangens des Quotienten der Summe der ersten d-Sollspannung Ud_soll_1 und der zweiten d-Sollspannung Ud_soll_2 und der Summe der ersten q-Sollspannung Uq_soll_1 und der zweiten q-Sollspannung Uq_soll_2. Bevorzugt ermittelt die Ermittlungseinheit 224 die Winkeldifferenz PhiOffs_opt in Abhängigkeit einer vorgegebenen Winkeldifferenz PhiOffs_vor. Die Logikeinheit 225 ist bevorzugt weiter dazu eingerichtet, mittels einer Vorgabeeinheit 226 die vorgegebene Winkeldifferenz PhiOffs_vor in Abhängigkeit eines vorgegebenen Winkelfehlers PhiErr_vor zu ermitteln oder in Abhängigkeit einer Differenz einer Sensorwinkeldifferenz PhiOffs_Sens und dem vorgegebenen Winkelfehler PhiErr_vor.

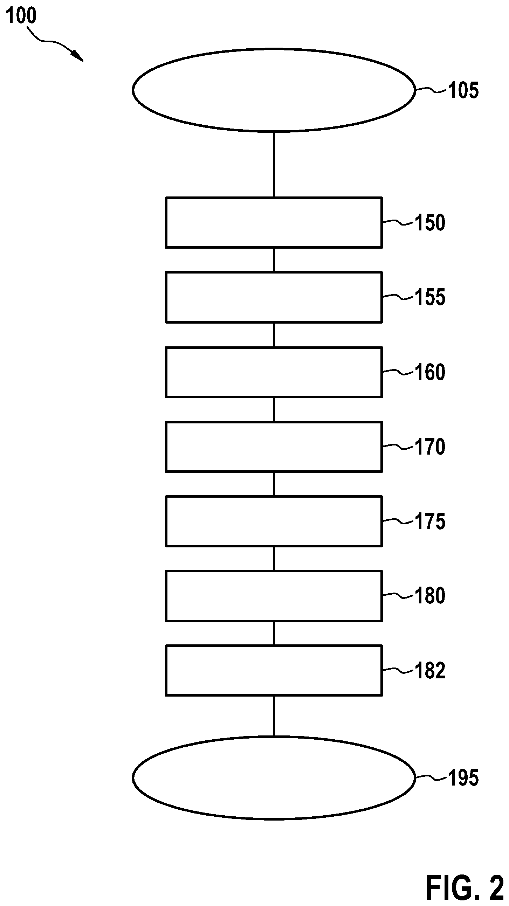

Figur 2 zeigt ein schematisch dargestelltes Ablaufdiagramm für ein Verfahren 100 zur Ermittlung einer Winkeldifferenz PhiOffs_opt zwischen einer Nulllage eines Rotorlagesensors 210 einer elektrischen Maschine 220 und einer Ausrichtung der Permanentmagneten der elektrischen Maschine 220. Die elektrische Maschine 220 wird mittels einer feldorientierten Regelung geregelt und der Rotor der elektrischen Maschine 220 rotiert. Das Verfahren 100 beginnt mit Schritt 105. In Schritt 150 wird ein erster d-Sollstromwertes Id_soll_1 ungleich Null Ampere und ein erster q-Sollstromwert Iq_soll_1 vorgegeben. In Schritt 155 wird eine erste d-Sollspannung Ud_soll_1 und eine erste q-Sollspannung Uq_soll_1 ermittelt. In Schritt 160 wird ein zweiter d-Sollstromwert Id_soll_2 vorgegeben, wobei der zweite d-Sollstromwert Id_soll_2 dem Wert des ersten d-Sollstromwertes Id_soll_1 mit komplementären Vorzeichen entspricht, und ein zweiter q-Sollstromwert Iq_soll_2, wobei der zweite q-Sollstromwert Iq_soll_2 dem Wert des ersten q-Sollstromwertes Iq_soll_1 mit komplementären Vorzeichen entspricht. In Schritt 170 wird eine zweite d-Sollspannung Ud_soll_2 und eine zweite q-Sollspannung Uq_soll_2 ermittelt. In Schritt 175 wird ein Winkelfehler PhiErr_opt in Abhängigkeit der ermittelten ersten d-Sollspannung Ud_soll_1, der ersten q-Sollspannung Uq_soll_1, der zweiten d-Sollspannung Ud_soll_2 und der zweiten q-Sollspannung Uq_soll_2 ermittelt. In Schritt 180 wird die Winkeldifferenz PhiOffs_opt in Abhängigkeit des Winkelfehlers PhiErr_opt ermittelt. Bevorzugt wird in Schritt 182 die Winkeldifferenz PhiOffs_opt in Abhängigkeit einer vorgegebenen Winkeldifferenz PhiOffs_vor ermittelt. Mit Schritt 195 endet das Verfahren.

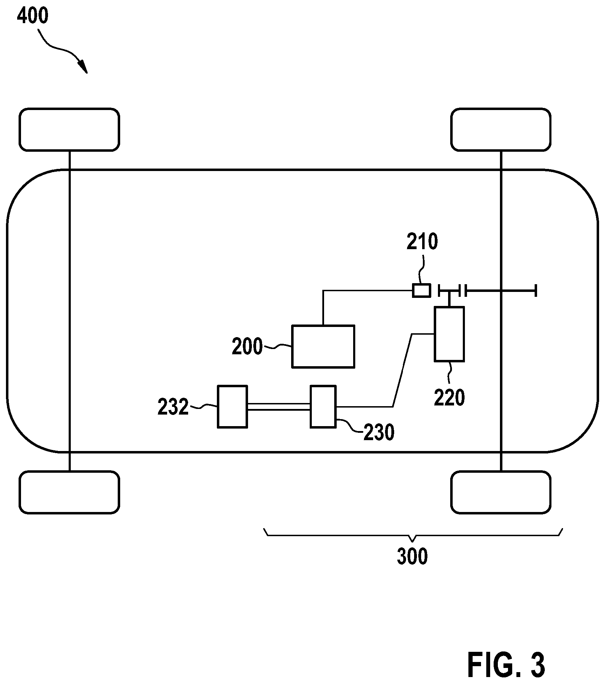

Die Figur 3 zeigt ein schematisch dargestelltes Fahrzeug 400 mit einem Antriebsstrang 300. Der Antriebsstrang umfasst eine Vorrichtung 200 zur Ermittlung einer Winkeldifferenz PhiOffs_opt zwischen der Nulllage eines Rotorlagesensors 210 einer elektrischen Maschine 220 und der Ausrichtung der Permanentmagneten der elektrischen Maschine 220. Bevorzugt umfasst der Antriebsstrang 300 die elektrische Maschine 220, einen Inverter 230 und/ oder eine Batterie 232 zur Versorgung des elektrischen Antriebsstrangs 300 mit elektrischer Energie.

**Patentansprüche**

1.   Verfahren (100) zur Ermittlung einer Winkeldifferenz (PhiOffs_opt) zwischen einer Nulllage eines Rotorlagesensors (210) einer elektrischen Maschine (220) und einer Ausrichtung der Permanentmagneten der elektrischen Maschine (220),

wobei die elektrische Maschine (220) mittels einer feldorientierten Regelung mit einem Stromregler (250) geregelt wird und der Rotor der elektrischen Maschine (220) rotiert,
mit den Schritten:

Vorgeben (150) eines ersten d-Sollstromwertes (Id_soll_1) ungleich Null Ampere als Führungsgröße des Stromreglers (250) und Vorgeben eines ersten q-Sollstromwertes (Iq_soll_1) als Führungsgröße des Stromreglers (250);
Ermitteln (155) einer ersten d-Sollspannung (Ud_soll_1) und einer ersten q-Sollspannung (Uq_soll_1) als resultierenden Stellgrößen des Stromreglers (250);
Vorgeben (160) eines zweiten d-Sollstromwertes (Id_soll_2) als Führungsgröße des Stromreglers (250), wobei der zweite d-Sollstromwert (Id_soll_2) dem Wert des ersten d-Sollstromwertes (Id_soll_1) mit komplementären Vorzeichen entspricht, und Vorgeben eines zweiten q-Sollstromwertes (Iq_soll_2) als Führungsgröße des Stromreglers (250), wobei der zweite q-Sollstromwert (Iq_soll_2) dem Wert des ersten q-Sollstromwertes (Iq_soll_1) mit komplementären Vorzeichen entspricht;
Ermitteln (170) einer zweiten d-Sollspannung (Ud_soll_2) und einer zweiten q-Sollspannung (Uq_soll_2) als resultierende Stellgrößen des Stromreglers;
Ermitteln (175) eines Winkelfehlers (PhiErr_opt) in Abhängigkeit der ermittelten ersten d-Sollspannung (Ud_soll_1), der ersten q-Sollspannung (Uq_soll_1), der zweiten d-Sollspannung (Ud_soll_2) und der zweiten q-Sollspannung (Uq_soll_2);
Ermitteln (180) der Winkeldifferenz (PhiOffs_opt) in Abhängigkeit des Winkelfehlers (PhiErr_opt).

2.   Verfahren (100) zur Ermittlung einer Winkeldifferenz (PhiOffs_opt) nach Anspruch 1,
wobei der erste q-Sollstromwert (Iq_soll_1) gleich Null Ampere vorgegeben wird.

3.   Verfahren (100) zur Ermittlung einer Winkeldifferenz (PhiOffs_opt) nach einem der vorhergehenden Ansprüche,
wobei das Ermitteln (175) des Winkelfehlers (PhiErr_opt) in Abhängigkeit des Arcustangens des Quotienten einer ersten Summe der ersten d-Sollspannung (Ud_soll_1) und der zweiten d-Sollspannung (Ud_soll_2) und einer zweiten Summe der ersten q-Sollspannung (Uq_soll_1) und der zweiten q-Sollspannung (Uq_soll_2) erfolgt.

4.   Verfahren (100) zur Ermittlung einer Winkeldifferenz (PhiOffs_opt) nach einem der vorhergehenden Ansprüche,
mit dem weiteren Schritt:
Ermitteln (182) der Winkeldifferenz (PhiOffs_opt) in Abhängigkeit einer vorgegebenen Winkeldifferenz (PhiOffs_vor).

5.   Verfahren (100) zur Ermittlung einer Winkeldifferenz (PhiOffs_opt) nach Anspruch 4,
wobei die vorgegebene Winkeldifferenz (PhiOffs_vor) in Abhängigkeit eines vorgegebenen Winkelfehlers (PhiErr_vor) ermittelt wird, insbesondere in Abhängigkeit einer Differenz einer Sensorwinkeldifferenz (PhiOffs_Sens) und eines vorgegebenen Winkelfehlers (PhiErr_vor).

6.   Verfahren (100) zur Ermittlung einer Winkeldifferenz (PhiOffs_opt) nach Anspruch 5,
wobei der vorgegebene Winkelfehler (PhiErr_vor) in Abhängigkeit einer Nullstromregelung oder einem Testpulsverfahren ermittelt wird.

7.   Verfahren (100) zur Ermittlung einer Winkeldifferenz (PhiOffs_opt) nach einem der Ansprüche 4 bis 6,
wobei das Ermitteln der Winkeldifferenz (PhiOffs_opt) in Abhängigkeit der Differenz der vorgegebenen Winkeldifferenz (PhiOffs_vor) und dem Winkelfehlers (PhiErr_opt) erfolgt.

**EP 4 342 069 B1**

8. Vorrichtung (200) zur Ermittlung einer Winkeldifferenz (PhiOffs_opt) zwischen der Nulllage eines Rotorlagesensors (210) einer elektrischen Maschine (220) und der Ausrichtung der Permanentmagneten der elektrischen Maschine (220),

   wobei die elektrische Maschine (220) mittels einer feldorientierten Regelung mit einem Stromregler (250) geregelt wird und der Rotor der elektrischen Maschine (220) rotiert,
   mit einer Logikeinrichtung (225) die dazu eingerichtet ist, ein Verfahren (100) nach einem der Ansprüche 1 bis 7 durchzuführen.

9. Antriebsstrang (300) mit einer Vorrichtung (200) gemäß Anspruch 8.

10. Fahrzeug (400) mit einem Antriebsstrang (300) nach Anspruch 9.

11. Computerprogramm, umfassend Befehle, die bewirken, dass die Vorrichtung (200) nach Anspruchs 8 die Verfahrensschritte nach Anspruch 1 bis 7 ausführt.

12. Computerlesbares Medium, auf dem das Computerprogramm nach Anspruch 11 gespeichert ist.


**Claims**

1. Method (100) for determining an angle difference (PhiOffs_opt) between a zero position of a rotor position sensor (210) of an electric machine (220) and an orientation of the permanent magnets of the electric machine (220),

   wherein the electric machine (220) is controlled by means of a field-oriented control with a current controller (250) and the rotor of the electric machine (220) rotates,
   comprising the steps of:

   specifying (150) a first d setpoint current value (Id_soll_1) not equal to zero amperes as a reference variable of the current controller (250) and specifying a first q setpoint current value (Iq_soll_1) as a reference variable of the current controller (250);
   determining (155) a first d setpoint voltage (Ud_soll_1) and a first q setpoint voltage (Uq_soll_1) as resulting manipulated variables of the current controller (250);
   specifying (160) a second d setpoint current value (Id_soll_2) as a reference variable of the current controller (250),
   wherein the second d setpoint current value (Id_soll_2) corresponds to the value of the first d setpoint current value (Id_soll_1) with complementary signs, and specifying a second q setpoint current value (Iq_soll_2) as a reference variable of the current controller (250), wherein the second q setpoint current value (Iq_soll_2) corresponds to the value of the first q setpoint current value (Iq_soll_1) with complementary signs;
   determining (170) a second d setpoint voltage (Ud_soll_2) and a second q setpoint voltage (Uq_soll_2) as resulting manipulated variables of the current controller;
   determining (175) an angle error (PhiErr_opt) depending on the determined first d setpoint voltage (Ud_soll_1), the first q setpoint voltage (Uq_soll_1), the second d setpoint voltage (Ud_soll_2) and the second q setpoint voltage (Uq_soll_2);
   determining (180) the angle difference (PhiOffs_opt) depending on the angle error (PhiErr_opt).

2. Method (100) for determining an angle difference (PhiOffs_opt) according to Claim 1,
   wherein the first q setpoint current value (Iq_soll_1) is specified as equal to zero amperes.

3. Method (100) for determining an angle difference (PhiOffs_opt) according to either of the preceding claims,
   wherein determining (175) the angle error (PhiErr_opt) is effected as a function of the arc-tangent of the quotient of a first sum of the first d setpoint voltage (Ud_soll_1) and the second d setpoint voltage (Ud_soll_2) and a second sum of the first q setpoint voltage (Uq_soll_1) and the second q setpoint voltage (Uq_soll_2).

4. Method (100) for determining an angle difference (PhiOffs_opt) according to any of the preceding claims,
   comprising the further step of:
   determining (182) the angle difference (PhiOffs_opt) depending on a specified angle difference (PhiOffs_vor).

**5.** Method (100) for determining an angle difference (PhiOffs_opt) according to Claim 4, wherein the specified angle difference (PhiOffs_vor) is determined depending on a specified angle error (PhiErr_vor), in particular depending on a difference between a sensor angle difference (PhiOffs_Sens) and a specified angle error (PhiErr_vor).

**6.** Method (100) for determining an angle difference (PhiOffs_opt) according to Claim 5, wherein the specified angle error (PhiErr_vor) is determined depending on a zero current control or a test pulse method.

**7.** Method (100) for determining an angle difference (PhiOffs_opt) according to any of Claims 4 to 6, wherein determining the angle difference (PhiOffs_opt) is effected depending on the difference between the specified angle difference (PhiOffs_vor) and the angle error (PhiErr_opt).

**8.** Device (200) for determining an angle difference (PhiOffs_opt) between the zero position of a rotor position sensor (210) of an electric machine (220) and the orientation of the permanent magnets of the electric machine (220),

> wherein the electric machine (220) is controlled by means of a field-oriented control with a current controller (250) and the rotor of the electric machine (220) rotates,
> comprising a logic unit (225) configured to carry out a method (100) according to any of Claims 1 to 7.

**9.** Drivetrain (300) comprising a device (200) according to Claim 8.

**10.** Vehicle (400) comprising a drivetrain (300) according to Claim 9.

**11.** Computer program, comprising instructions that cause the device (200) according to Claim 8 to carry out the method steps according to Claims 1 to 7.

**12.** Computer-readable medium on which the computer program according to Claim 11 is stored.

**Revendications**

**1.** Procédé (100) de détermination d'une différence angulaire (PhiOffs_opt) entre une position zéro d'un capteur de position de rotor (210) d'une machine électrique (220) et une orientation des aimants permanents de la machine électrique (220),

> la machine électrique (220) étant régulée au moyen d'une régulation à orientation de champ avec un régulateur de courant (250) et le rotor de la machine électrique (220) étant en rotation,
> comprenant les étapes suivantes :
>
> > prédéfinition (150) d'une première valeur de courant de consigne d (Id_soll_1) différente de zéro ampère en tant que grandeur de référence du régulateur de courant (250) et prédéfinition d'une première valeur de courant de consigne q (Iq_soll_1) en tant que grandeur de référence du régulateur de courant (250) ;
> > détermination (155) d'une première tension de consigne d (Ud_soll_1) et d'une première tension de consigne q (Uq_soll_1) en tant que grandeurs de réglage résultantes du régulateur de courant (250) ;
> > prédéfinition (160) d'une deuxième valeur de courant de consigne d (Id_soll_2) en tant que grandeur de référence du régulateur de courant (250),
> > la deuxième valeur de courant de consigne d (Id_soll_2) correspondant à la valeur de la première valeur de courant de consigne d (Id_soll_1) avec des signes complémentaires, et prédéfinition d'une deuxième valeur de courant de consigne q (Iq_soll_2) en tant que grandeur de référence du régulateur de courant (250), la deuxième valeur de courant de consigne q (Iq_soll_2) correspondant à la valeur de la première valeur de courant de consigne q (Iq_soll_1) avec des signes complémentaires ;
> > détermination (170) d'une deuxième tension de consigne d (Ud_soll_2) et d'une deuxième tension de consigne q (Uq_soll_2) en tant que grandeurs de réglage résultantes du régulateur de courant ;
> > détermination (175) d'une erreur angulaire (PhiErr_opt) en fonction de la première tension de consigne d (Ud_soll_1), de la première tension de consigne q (Uq_soll_1), de la deuxième tension de consigne d (Ud_soll_2) et de la deuxième tension de consigne q (Uq_soll_2) déterminées ;
> > détermination (180) de la différence angulaire (PhiOffs_opt) en fonction de l'erreur angulaire (PhiErr_opt).

**2.** Procédé (100) de détermination d'une différence angulaire (PhiOffs_opt) selon la revendication 1, la première valeur de courant de consigne q (Iq_soll_1) étant prédéfinie à zéro ampère.

**3.** Procédé (100) de détermination d'une différence angulaire (PhiOffs_opt) selon l'une des revendications précédentes, la détermination (175) de l'erreur angulaire (PhiErr_opt) étant effectuée en fonction de l'arc tangente du quotient d'une première somme de la première tension de consigne d (Ud_soll_1) et de la deuxième tension de consigne d (Ud_soll_2) et d'une deuxième somme de la première tension de consigne q (Uq_soll_1) et de la deuxième tension de consigne q(Uq_soll_2).

**4.** Procédé (100) de détermination d'une différence angulaire (PhiOffs_opt) selon l'une des revendications précédentes, comprenant l'étape supplémentaire suivante :
détermination (182) de la différence angulaire (PhiOffs_opt) en fonction d'une différence angulaire prédéfinie (PhiOffs_vor).

**5.** Procédé (100) de détermination d'une différence angulaire (PhiOffs_opt) selon la revendication 4, la différence angulaire prédéfinie (PhiOffs_vor) étant déterminée en fonction d'une erreur angulaire prédéfinie (PhiErr_vor), notamment en fonction d'une différence entre une différence angulaire du capteur (PhiOffs_Sens) et une erreur angulaire prédéfinie (PhiErr_vor).

**6.** Procédé (100) de détermination d'une différence angulaire (PhiOffs_opt) selon la revendication 5, l'erreur angulaire prédéfinie (PhiErr_vor) étant déterminée en fonction d'une régulation du courant nul ou d'un procédé d'impulsion de test.

**7.** Procédé (100) de détermination d'une différence angulaire (PhiOffs_opt) selon l'une des revendications 4 à 6, la détermination de la différence angulaire (PhiOffs_opt) étant effectuée en fonction de la différence entre la différence angulaire prédéfinie (PhiOffs_vor) et l'erreur angulaire (PhiErr_opt).

**8.** Arrangement (200) de détermination d'une différence angulaire (PhiOffs_opt) entre une position zéro d'un capteur de position de rotor (210) d'une machine électrique (220) et une orientation des aimants permanents de la machine électrique (220),

la machine électrique (220) étant régulée au moyen d'une régulation à orientation de champ avec un régulateur de courant (250) et le rotor de la machine électrique (220) étant en rotation,
comprenant un dispositif logique (225) qui est conçu pour mettre en œuvre un procédé (100) selon l'une des revendications 1 à 7.

**9.** Chaîne cinématique (300) comprenant un arrangement (200) selon la revendication 8.

**10.** Véhicule (400), comprenant une chaîne cinématique (300) selon la revendication 9.

**11.** Programme informatique comprenant des instructions qui ont pour effet que l'arrangement (200) selon la revendication 8 exécute les étapes du procédé selon l'une des revendications 1 à 7.

**12.** Support lisible par ordinateur, sur lequel est enregistré le programme informatique selon la revendication 11.

FIG. 1

FIG. 2

400

210

200

232

230

220

300

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 104079215 B
- EP 2770626 B1
- DE 102012102898 A1
- EP 2770627 A1
- DE 102008001408 A1
- DE 102008042360 A1